# EUROPEAN PATENT SPECIFICATION

(11) **EP 3 221 529 B1**
(45) Date of publication and mention of the grant of the patent: **23.12.2020**
(21) Application number: 15860138.5
(22) Date of filing: 17.11.2015
(51) Int. Cl.: C04B 28/14

(54) **GYPSUM PANELS, CORES, AND METHODS FOR THE MANUFACTURE THEREOF**
GIPSPLATTEN, -KERNE UND VERFAHREN ZU DEREN HERSTELLUNG
PANNEAUX DE PLÂTRE, NOYAUX ET PROCÉDÉS DE FABRICATION DE CEUX-CI

(30) Priority: 17.11.2014 US 201462080625 P
(43) Date of publication of application: 27.09.2017
(73) Proprietor: Georgia-Pacific Gypsum LLC, Atlanta, GA 30303 (US)
(72) Inventor: MOORE, Michael H., Fletcher, Oklahoma 73541 (US); SANDERS, Christopher J., Southaven, Mississippi 38672 (US)
(74) Representative: Grünecker Patent- und Rechtsanwälte PartG mbB
(86) International application number: PCT/US2015/060962
(87) International publication number: WO 2016/081390

(56) References cited:
- DE-C1- 4 107 623
- JP-A- 2005 035 866
- KR-A- 20030 094 130
- US-A- 4 564 544
- US-A- 5 220 762
- US-A1- 2007 059 513
- US-A1- 2007 059 513
- US-A1- 2009 152 519
- US-A1- 2011 195 241
- US-A1- 2014 158 273

## Description

### FIELD

The present disclosure relates to gypsum panels, and more particularly to fire resistant gypsum panel cores and methods for the manufacture thereof.

### BACKGROUND

Gypsum panels, or wallboards, are used in commercial and residential building construction to form the partitions or walls of rooms, hallways, and ceilings, and in exterior wall or roof construction.

In commercial or institutional applications, gypsum board products may have fire resistance ratings of one hour or higher. However, to achieve such fire resistance ratings, boards having a thickness of 1.27 cm (½ inch) or greater are very heavy, with weights of at least 8.79 kg/m² (1800 pounds per thousand square feet (lb/msf)). Moreover, to achieve a fire resistance rating of one hour or more, these boards typically include a number of additives in the core in relatively large proportions. Due to their high weight and the cost associated with manufacturing cores containing the necessary additives, such boards are generally not used in residential construction.

Instead, lower weight boards, with weights of 7.08 kg/m² (1450 lb/msf) or lower, are typically used in residential construction. However, these low weight boards typically do not achieve a 30 or 45 minute fire resistance performance level, even with the addition of core additives to improve their fire resistance.

DE 4107623 C1 discloses a gypsum board with a high fire resistance. US 4564544 A discloses a fire-resistant gypsum board.

Accordingly, gypsum panels and cores having improved fire resistance and high temperature board integrity are desirable.

### SUMMARY

The present invention provides a gypsum panel, comprising:
a core having a thickness of about 1.27 cm (½ inch) and a weight of from 6.84 kg/m² to 8.54 kg/m² (1400 lb/msf to 1750 lb/msf), the core comprising gypsum and fiberglass, the fiberglass being present in the core in an amount of from 0.0073 kg/m² to 0.015 kg/m² (1.5 lb/msf to 3 lb/msf) and the gypsum being present in the core in an amount of from 6.59 kg/m² to 8.15 kg/m² (1350 lb/msfto 1670 lb/msf); and
wherein the core has an ASTM E-119 wood stud fire test rating of at least 30 minutes.

In another embodiment, the present invention provides a method of making a gypsum panel, comprising:
combining gypsum stucco in an amount of 5.66 kg/m² to 6.93 kg/m² (1160 lb/msf to 1420 lb/msf), water, and fiberglass to form a slurry; and
setting the slurry to form a core having a thickness of about 1.27 cm (½ inch) and a weight of from 6.84 kg/m² to 8.54 kg/m² (1400 lb/msf to 1750 lb/msf), and comprising fiberglass in an amount of from 0.0073 kg/m² to 0.015 kg/m² (1.5 lb/msf to 3 lb/msf) and gypsum in an amount of from 6.59 kg/m² to 8.15 kg/m² (1350 lb/msf to 1670 lb/msf),
wherein the core has an ASTM E-119 wood stud fire test rating of at least 30 minutes.

Preferred embodiments are set forth in the subclaims.

### BRIEF DESCRIPTION OF THE DRAWINGS

**FIG. 1** is a photograph of a comparative gypsum panel core containing no fiberglass after an experimental fire test.
**FIG. 2** is a photograph of a gypsum panel core containing fiberglass after an experimental fire test.
**FIG. 3** is a photograph of a gypsum panel core containing fiberglass after an experimental fire test.
**FIG. 4** is a graph showing the experimental individual thermocouple temperature measured over time for various gypsum panel core samples in an experimental fire test.
**FIG. 5** is a graph showing the experimental average thermocouple temperature measured over time for various gypsum panel core samples in an experimental fire test.

### DETAILED DESCRIPTION

Disclosed herein are gypsum panels, panel cores, and methods for manufacturing such panels and cores. These cores and panels provide one or more improvements over known gypsum cores and panels by offering fire resistant mid-weight gypsum based panels without requiring large amounts of fire resistance enhancing additives. In particular, the gypsum panel cores of the present disclosure have a thickness of about 1.27 cm (½ inch) and a weight of from 6.84 kg/m² to 8.54 kg/m² (1400 lb/msfto 1750 lb/msf). These cores also have an ASTM E-119 wood stud fire test rating of at least 30 minutes. The ASTM E-119 test indicates the duration for which a gypsum panel or core in a wall assembly contains a fire and substantially retains its structural integrity when exposed to fire conditions.

Gypsum panels, panel cores, and methods for manufacturing such panels and cores are described in detail below.

### GYPSUM PANELS AND CORES

A gypsum panel core includes gypsum and fiberglass and has a thickness of about 1.27 cm (½ inch) and a weight of from 6.84 kg/m² to 8.54 kg/m² (1400 lb/msf to 1750 lb/msf).

As used herein, the term "a thickness of about 1.27 cm (½ inch)" refers to core products having a thickness of 1.27 cm (½ inch) plus or minus 0.16 cm (¹/₁₆ inch). That is, panels having a thickness of 1.59 cm (⁵/₈ inch) are not intended to come within the scope of the present disclosure.

In one embodiment, the core has an ASTM E-119 wood stud fire test rating of at least 45 minutes.

In some embodiments, the core has a weight of from 7.08 kg/m² to 8.30 kg/m² (1450 lb/msf to 1700 lb/msf).

The fiberglass is present in the core in an amount of from 0.0073 kg/m² to 0.015 kg/m² (1.5 lb/msf to 3 lb/msf). In non-claimed embodiments, the fiberglass is chopped glass fiber of a suitable size. For example, the glass fibers may have an average diameter from about 9 to about 17 microns and an average length from 0.64 cm to 3.81 cm (¼ inch to 1.5 inch). In some non-claimed embodiments, the fibers may have an average diameter of from about 13 to about 17 microns and an average length of from 0.64 cm to 1.91 cm (¼ inch to ¾ inch). In a non-claimed embodiment, the fiberglass fibers have an average diameter of about 16 microns and an average length of about 1.27 cm (½ inch) (such as Johns Manville Duracore SF Plus type M300, Borocalcium Alumina Silicate - Type E).

The gypsum is present in the core in an amount of from 6.59 kg/m² to 8.15 kg/m² (1350 lb/msf to 1670 lb/msf). In certain embodiments, the gypsum is present in the core in an amount of from about 6.84 kg/m² to 7.91 kg/m² (1400 lb/msf to 1620 lb/msf).

The gypsum stucco used to manufacture the core may be any suitable hemihydrate gypsum stucco, such as alpha hemihydrate gypsum, beta hemihydrate gypsum, or a combination thereof. Upon rehydration of the gypsum hemihydrate during the manufacture process, gypsum dihydrate is formed. Thus, the amount of gypsum present in a set core refers to the amount of gypsum dihydrate in the set core, whereas the amount of gypsum stucco combined with water to form the core refers to the amount of gypsum hemihydrate used.

In some embodiments, one or more additives are present in the gypsum panel core and are selected from pregelatinized starch, sodium trimetaphosphate, kaolin clay, siloxane, and siliconate. In non-claimed embodiments, the gypsum panel core may optionally include any combination of foaming agents, dispersants, retarders, accelerators, potash, starch, dextrose, boric acid, vermiculite (such as expandable vermiculite), clay, cement, or other suitable additives. In a non-claimed embodiment, a foaming agent, such as soap, may be present in the core in an amount of from about 0.98 g/m² to 2.93 g/m² (0.2 lb/msf to 0.6 lb/msf), or from 1.46 g/m² to 2.44 g/m² (0.3 lb/msf to 0.5 lb/msf). In a non-claimed embodiment, dispersant, such as naphthalene sulfonate, may be present in the core in an amount of from 0.49 g/m² to 24.4 g/m² (0.1 lb/msf to 5 lb/msf), or from 0.49 g/m² to 19.5 g/m² (0.1 lb/msf to 4 lb/msf). In a non-claimed embodiment, a retarder, such as a chelating agent (for example, Dow Versinex 80), may be present in the core in an amount of from 0.49 g/m² to 4.39 g/m² (0.1 lb/msf to 0.9 lb/msf), or from 0.49 g/m² to 2.44 g/m² (0.1 lb/msf to 0.5 lb/msf). In a non-claimed embodiment, an accelerator, such as finely ground gypsum particles, may be present in the core in an amount of from 4.88 g/m² to 48.8 g/m² (1 lb/msf to 10 lb/msf), or from 5.86 g/m² to 24.4 g/m² (1.2 lb/msf to 5 lb/msf). In a non-claimed embodiment, potash, such as potassium sulfate, may be present in the core in an amount of from 0.49 g/m² to 19.5 g/m² (0.1 lb/msf to 4 lb/msf), or from 0.49 g/m² to 9.76 g/m² (0.1 lb/msf to 2 lb/msf). In a non-claimed embodiment, pregelatinized starch, may be present in the core in an amount of from 4.88 g/m² to 53.7 g/m² (1 lb/msf to 11 lb/msf), or from 24.4 g/m² to 43.9 g/m² (5 lb/msf to 9 lb/msf). In a non-claimed embodiment, dextrose may be present in the core in an amount of from about 0.49 g/m² to 24.4 g/m² (0.1 lb/msf to 5 lb/msf), or from 0.49 g/m² to 9.76 g/m² (0.1 lb/msf to 2 lb/msf). In a non-claimed embodiment, boric acid may be present in the core in an amount of from 0.49 g/m² to 29.3 g/m² (0.1 lb/msf to 6 lb/msf), or from 0.49 g/m² to 14.7 g/m² (0.1 lb/msf to 3 lb/msf). In a non-claimed embodiment, siloxane may be present in the core in an amount of from 0.49 g/m² to 73.2 g/m² (0.1 lb/msf to 15 lb/msf), or from 0.49 g/m² to 58.6 g/m² (0.1 lb/msf to 12 lb/msf). In a non-claimed embodiment, siliconate may be present in the core in an amount of from 0.49 g/m² to 48.8 g/m² (0.1 lb/msf to 10 lb/msf), or from 0.49 g/m² to 39.1 g/m² (0.1 lb/msf to 8 lb/msf). In a non-claimed embodiment, unexpanded vermiculite may be present in the core in an amount of from 0.49 g/m² to 244 g/m² (0.1 lb/msf to 50 lb/msf), or from 0.49 g/m² to 146.5 g/m² (0.1 lb/msf to 30 lb/msf). In a non-claimed embodiment, clay, such as finely ground kaolin clay, may be present in the core in an amount of from 0.49 g/m² to 195.3 g/m² (0.1 lb/msf to 40 lb/msf), or from 0.49 g/m² to 97.7 g/m² (0.1 lb/msf to 20 lb/msf). In a non-claimed embodiment, diatomaceous earth or cement may be present in the core in an amount of from 0.49 g/m² to 97.7 g/m² (0.1 lb/msf to 20 lb/msf), or from 0.49 g/m² to 48.8 g/m² (0.1 lb/msf to 10 lb/msf). In a non-claimed embodiment, sodium trimetaphosphate may be present in the core in an amount of from 4.88 g/m² to 58.6 g/m² (1 lb/msf to 12 lb/msf). For example, siloxane and/or siliconate may be used in gypsum panel cores to achieve improved water resistance. For example, the use of expandable vermiculite in gypsum panels is described in U.S. Patent No. 8,323,785. In one embodiment, the gypsum panel core further includes pregelatinized starch and sodium trimetaphosphate to attain a light, strong board, such as described in U.S. Patent No. 7,736,720.

In non-claimed embodiments, a wall assembly built with the gypsum panel has a sound transmission class (STC) rating of greater than 30. For example, various wall assemblies or constructions made using the gypsum panel may have an STC rating of from about 31 to about 50.

In certain embodiments, a gypsum panel includes any embodiment of a gypsum panel core as described herein. For example, a gypsum panel may include a core having a thickness of about 1.27 cm (½ inch) and a weight of from 6.84 kg/m² to 8.54 kg/m² (1400 lb/msf to 1750 lb/msf), the core containing gypsum and fiberglass, the fiberglass being present in the core in an amount of from 0.0073 kg/m² to 0.015 kg/m² (1.5 lb/msf to 3 lb/msf) wherein the core has an ASTM E-119 wood stud fire test rating of at least 30 minutes. A gypsum panel may also include a suitable paper facer on one or both faces of the core.

In certain embodiments, a gypsum panel core includes a densified gypsum layer, having a higher density than the typical gypsum core. Such densified, or slate coat, layers are known in the art. In the presently described gypsum panel cores, a densified gypsum layer may be provided adjacent to the a layer comprising the gypsum and fiberglass, as described herein.

In non-claimed embodiments, gypsum panels containing the cores described herein may be used in residential construction. For example, the panels described herein may be fastened to studs (e.g., wood or metal studs) having a spacing of about 40.6 cm (16 inches) or about 61.0 cm (24 inches).

### METHODS

A method of making a gypsum panel includes (i) combining gypsum stucco in an amount of 5.66 kg/m² to 6.93 kg/m², water, and fiberglass to form a slurry, and (ii) setting the slurry to form a core having a thickness of about 1.27 cm (½ inch), a weight of from about 6.84 kg/m² to 8.54 kg/m² (1400 lb/msf to 1750 lb/msf), and containing fiberglass in an amount of from 0.0073 kg/m² to 0.015 kg/m² according to claim 5. The gypsum panel cores produced by this method may have any of the features, or combinations of features, described herein. The core produced by this method has an ASTM E-119 wood stud fire test rating of at least 30 minutes.

The gypsum stucco is added to the slurry in an amount of 5.66 kg/m² to 6.93 kg/m² (1160 lb/msf to 1420 lb/msf), for a core having a thickness of about 1.27 cm (½ inch). In a non-claimed embodiment, the gypsum stucco is added to the slurry in an amount of 5.86 kg/m² to 6.74 kg/m² (1200 lb/msf to 1380 lb/msf), for a core having a thickness of about 1.27 cm (½ inch).

In non-claimed embodiments, the water is added to the slurry in an amount of about 3.10 kg/m² to 5.63 kg/m² (635 lb/msf to about 1153 lb/msf), for a core having a thickness of about 1.27 cm (½ inch). In one embodiment, the water is added to the slurry in an amount of 3.42 kg/m² to 5.18 kg/m² (700 lb/msf to 1061 lb/msf), for a core having a thickness of about 1.27 cm (½ inch). For example, the water may be combined with the gypsum stucco in a ratio of from about 0.70 to about 0.84. In one embodiment, water is combined with the gypsum stucco in a ratio of from about 0.72 to about 0.80.

In some embodiments, one or more additives are combined with the stucco, water, and fiberglass in the slurry. The one or more additives are selected from pregelatinized starch, sodium trimetaphosphate, kaolin clay, siloxane, and siliconate. In non-claimed embodiments, the slurry may optionally include any combination of foaming agents, dispersants, retarders, accelerators, potash, starch, dextrose, boric acid, vermiculite, clay, cement, or other suitable additives.

In some embodiments, a foaming agent is combined with water and is foamed with air before being combined with the stucco slurry. In certain non-claimed embodiments, the foaming agent and water are foamed with an aerator. In a non-claimed embodiment, a foaming agent, such as soap, may be added to the stucco slurry in an amount of from 0.98 g/m² to 2.93 g/m² (0.2 lb/msf to 0.6 lb/msf), or from 1.46 g/m² to 2.44 g/m² (0.3 lb/msf to 0.5 lb/msf), as measured per resulting panel core having a thickness of about 1.27 cm (½ inch). In a non-claimed embodiment, the foaming agent and water may be combined with air in an amount of 3.35 x 10⁻³ m³/m² to 6.71 x 10⁻³ m³/m² (11 cf/msf to 22 cf/msf), or from about 3.96 x 10⁻³ m³/m² to 0.212 x 10⁻³ m³/m² (13 cf/msfto 19 cf/msf), as measured per resulting panel core having a thickness of about 1.27 cm (½ inch). In a non-claimed embodiment, water may be combined with the foaming agent in an amount of from 195 g/m² to 864 g/m² (40 lb/msf to 177 lb/msf), as measured per resulting panel core having a thickness of about 1.27 cm (½ inch). In a non-claimed embodiment, water is combined with the foaming agent in an amount of from 210 g/m² to 801 g/m² (43 lb/msf to 164 lb/msf), as measured per resulting panel core having a thickness of about 1.27 cm (½ inch). In some non-claimed embodiments, the total water present in the slurry (e.g., water combined with foaming agent, water combined with stucco) is from 3.96 kg/m² to 5.82 kg/m² (812 lb/msf to 1193 lb/msf), as measured per resulting panel core having a thickness of about 1.27 cm (½ inch). In one non-claimed embodiment, the total water present in the slurry is from 4.22 kg/m² to 5.39 kg/m² (864 lb/msf to 1104 lb/msf), as measured per resulting panel core having a thickness of about 1.27 cm (1/2 inch).

In a non-claimed embodiment, a dispersant, such as a naphthalene sulfonate, may be added to the slurry in an amount of from 0.49 g/m² to 24.4 g/m² (0.1 lb/msf to 5 lb/msf), or from 0.49 g/m² to 19.5 g/m² (0.1 lb/msf to 4 lb/msf), for a core having a thickness of about 1.27 cm (½ inch). In a non-claimed embodiment, a retarder, such as a chelating agent (for example Dow Versinex 80), may be added to the slurry in an amount of from 0.49 g/m² to 4.39 g/m² (0.1 lb/msf to 0.9 lb/msf), or from 0.49 g/m² to 2.44 g/m² (0.1 lb/msf to 0.5 lb/msf), for a core having a thickness of about 1.27 cm (½ inch). In a non-claimed embodiment; an accelerator, such as such as finely ground gypsum particles, may be added to the slurry in an amount of from about 4.88 g/m² to 48.8 g/m² (1 lb/msf to 10 lb/msf), or from 5.86 g/m² to 24.4 g/m² (1.2 lb/msfto 5 lb/msf), for a core having a thickness of about 1.27 cm (½ inch). In a non-claimed embodiment, potash, such as potassium sulfate, may be added to the slurry in an amount of from 0.49 g/m² to 19.5 g/m² (0.1 lb/msf to 4 lb/msf), or from 0.49 g/m² to 9.76 g/m² (0.1 lb/msf to 2 lb/msf), for a core having a thickness of about 1.27 cm (½ inch). In a non-claimed embodiment, starch may be added to the slurry in an amount of from 4.88 g/m² to 53.7 g/m² (1 lb/msf to 11 lb/msf), or from 24.4 g/m² to 43.9 g/m² (5 lb/msf to 9 lb/msf), for a core having a thickness of about 1.27 cm (½ inch). In a non-claimed embodiment, dextrose may be added to the slurry in an amount of from 0.49 g/m² to 24.4 g/m² (0.1 lb/msf to 5 lb/msf), or from 0.49 g/m² to 9.76 g/m² (0.1 lb/msf to 2 lb/msf), for a core having a thickness of about 1.27 cm (½ inch). In a non-claimed embodiment, boric acid may be added to the slurry in an amount of from 0.49 g/m² to 29.3 g/m² (0.1 lb/msf to 6 lb/msf), or from 0.49 g/m² to 14.7 g/m² (0.1 lb/msf to 3 lb/msf), for a core having a thickness of about 1.27 cm (½ inch). In a non-claimed embodiment, siloxane may be added to the slurry in an amount of from 0.49 g/m² to 73.2 g/m² (0.1 lb/msf to 15 lb/msf), or from 0.49 g/m² to 58.6 g/m² (0.1 lb/msf to 12 lb/msf), for a core having a thickness of about 1.27 cm (½ inch). In a non-claimed embodiment, siliconate may be added to the slurry in an amount of from 0.49 g/m² to 48.8 g/m² (0.1 lb/msf to 10 lb/msf), or from 0.49 g/m² to 39.1 g/m² (0.1 lb/msf to 8 lb/msf), for a core having a thickness of about 1.27 cm (½ inch). In a non-claimed embodiment, vermiculite may be added to the slurry in an amount of from 0.49 g/m² to 244 g/m² (0.1 lb/msf to 50 lb/msf), or from 0.49 g/m² to 146.5 g/m² (0.1 lb/msf to 30 lb/msf), for a core having a thickness of about 1.27 cm (½ inch). In a non-claimed embodiment, day, such as finely ground kaolin clay, may be added to the slurry in an amount of from 0.49 g/m² to 195.3 g/m² (0.1 lb/msf to 40 lb/msf), or from 0.49 g/m² to 97.7 g/m² (0.1 lb/msf to 20 lb/msf), for a core having a thickness of about 1.27 cm (½ inch). In a non-claimed embodiment, cement may be added to the slurry in an amount of from 0.49 g/m² to 97.7 g/m² (0.1 lb/msf to 20 lb/msf), or from 0.49 g/m² to 48.8 g/m² (0.1 lb/msf to 10 lb/msf), for a core having a thickness of about 1.27 cm (½ inch).

In some embodiments, a method of making a gypsum panel also includes affixing a paper facer to at least one face of the core.

### EXAMPLES

Sample gypsum panel cores were manufactured in accordance with the present disclosure and tested as described below.

In particular, gypsum panel cores were made according to the formulation shown in Table 1, with varying amounts of fiberglass. The foaming agent was combined with the foam water and aerated with the foam air to form a foam. The foam was then combined with a slurry of the other components and fiberglass to form the core slurry. The core slurry was allowed to set to form a gypsum panel core having a thickness of approximately 1.27 cm (½ inch).

| **Component** | **Amount Used to Make ½ inch Core** |
|---|---|
| Gypsum stucco | 6.05 kg/m² (1240 lb/msf) |
| Water | 4.54 kg/m² (930 lb/msf) |
| Foam water | 391 g/m² (80 lb/msf) |
| Foaming agent (soap) | 2.44 g/m² (0.5 lb/msf) |
| Foam air | 4.88 m³/m² (16 cf/msf) |
| Dispersant (naphthalene sulfonate) | 17.1 g/m² (3.5 lb/msf) |
| Retarder | 1.22 g/m² (0.25 lb/msf) |
| Accelerator | 7.32 g/m² (1.5 lb/msf) |
| Potash (potassium sulfate) | 3.91 g/m² (0.8 lb/msf) |
| Starch | 39.1 g/m² (8 lb/msf) |
| Dextrose (sugar) | 8.3 g/m² (1.7 lb/msf |
| Boric acid | 12.2 g/m² (2.5 lb/msf) |
| **Table 1: Experimental Gypsum Panel Core Formulation** | |

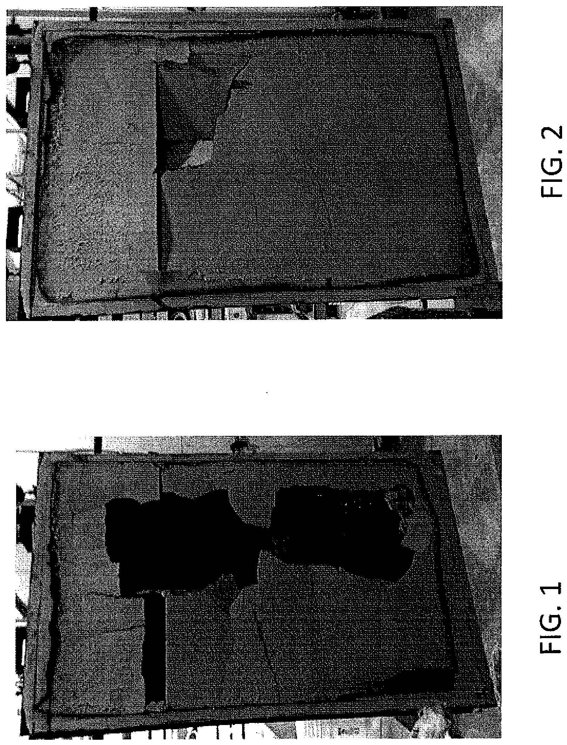

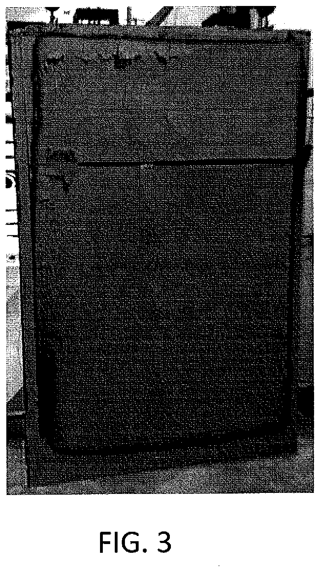

In one test, gypsum panel samples (91 cm by 152 cm (3 feet by 5 feet) were prepared according to the formulation of Table 1 with fiberglass in an amount of 0 g/m² (0 lb/msf), 7.32 g/m² (1.5 lb/msf), or 14.7 g/m² (3 lb/msf). The gypsum panels each had a weight of 7.57 kg/m² (1550 lb/msf). The three panels were subjected to identical fire testing to determine contribution of fiberglass content to fire resistance and board integrity. **FIGS. 1-3** show the gypsum panel cores after the fire testing. **FIG. 1** shows the panel containing 0 lb/msf of fiberglass (not according to the invention). **FIG. 2** shows the panel containing 7.32 g/m² (1.5 lb/msf) of fiberglass. **FIG. 3** shows the panel containing 14.7 g/m² (3 lb/msf) of fiberglass. These tests surprisingly demonstrated that adding even a very small amount of fiberglass to the gypsum panel core provides significant fire resistance and board integrity.

In another test, samples were made according to the formulation given in Table 1, with varying fiberglass content and varying board weight. These samples were furnace tested to compare the time to failure of the panel in a fire scenario. The sample parameters and test results are shown in Table 2 below.

The test samples were prepared at two manufacturing plants (indicated as "A" and "B" in Table 2), which varied non-critical process parameters (including slight variations of core additive amounts) during core manufacturing. Sample 11 was a commercial 1.59 cm (⁵/₈ inch) 30 minute fire rated board tested for comparison purposes. The plant, board weight, board thickness, and core fiberglass content are given for each sample. The samples were furnace tested on various stud structures (nominal 5.08 cm x 10.2 cm (2" x 4") 20 or 25 gauge steel studs, or Douglas fir 2" x 4" wood studs).

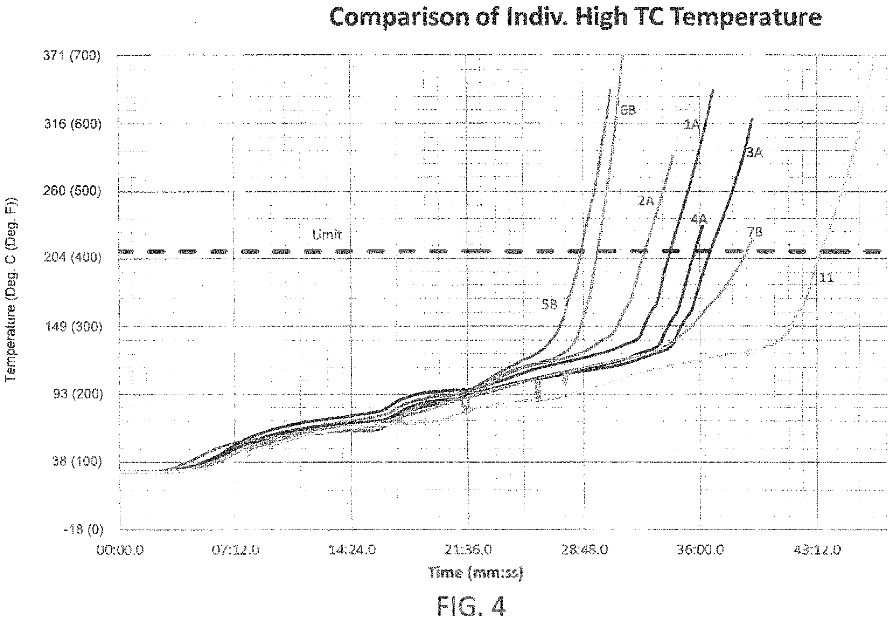

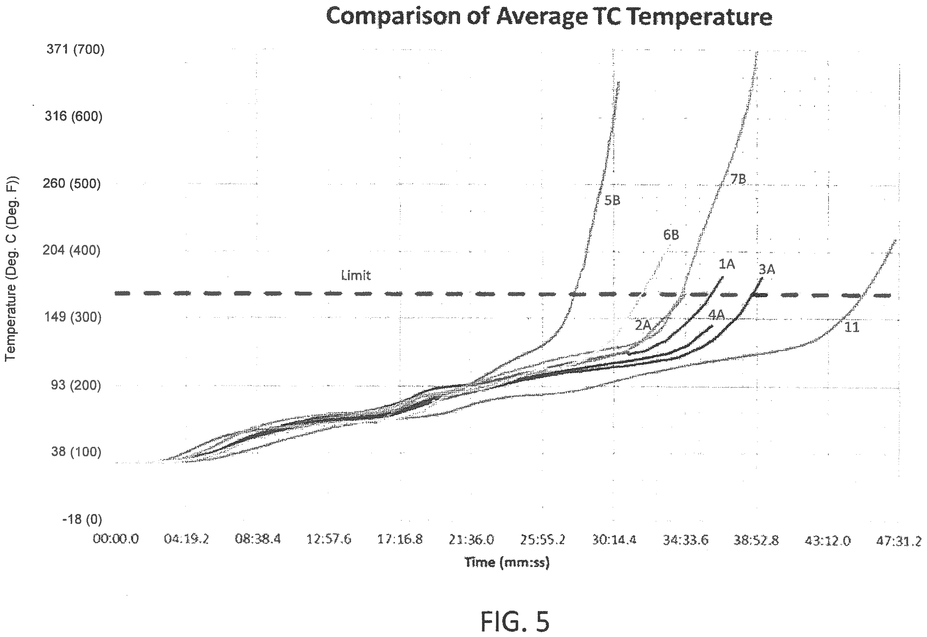

Each of the samples were equipped with a number of thermocouples and then exposed to furnace temperatures, to represent a fire scenario. The thermocouples were used to monitor the ability of the panel to withstand heat transfer and the time to failure of the wall, which represents the time a panel installed as a residential wall would maintain its structural integrity during a fire. Failure time was measured both by the time it took any individual thermocouple on a panel to reach 163 °C (325 °F) above ambient temperature and by the time it took for the average of all thermocouples on a panel to reach 121 °C (250 °F) above ambient temperature. **FIGS. 4** and **5** show the thermocouple measurements for the samples over time. Visual observations of panel cracking were also made.

| **Sample** | **Board Weight (kg/m²) (lb/msf)** | **Thickness (cm) (inch)** | **Fiberglass (g/m²) (lb/msf)** | **Studs** | **Finish Rating (mm:ss)** | **Individual T/C Failure Time (163 °C) (325 °F) (mm:ss)** | **Average T/C Failure Time (121 °C) (250 °F) (mm:ss)** | **Observations** |
|---|---|---|---|---|---|---|---|---|
| 1A | 6.987 (1431) | 1.25 (0.491) | 10.7 (2.2) | 20 ga. | 14:44.0 | 34:12.0 | 36:08.0 | Microfractures |
| 2A | 7.568 (1550) | 1.24 (0.490) | 0 | 20 ga. | 15:22.0 | 32:38.0 | 34:34.0 | Significant cracking |
| 3A | 7.568 (1550) | 1.25 (0.491) | 7.3 (1.5) | 20 ga. | 15:16.0 | 36:40.0 | 38:38.0 | one open crack in field of lower board |
| 4A | 7.573 (1551) | 1.24 (0.489) | 14.7 (3) | 20 ga. | 15:18.0 | 35:42.0 | - | No cracks |
| 5B | 6.987 (1431) | 1.27 (0.500) | 0 | 20 ga. | 15:32.0 | 28:42.0 | 27:52.0 | Multiple large cracks |
| 6B | 7.597 (1556) | 1.26 (0.498) | 0 | 20 ga. | 15:58.0 | 29:42.0 | 31:56.0 | Multiple cracks 17 min. into test |
| 7B | 7.626 (1562) | 1.27 (0.501) | 9.8 (2) | 20 ga. | 15:08.0 | 38:56.0 | 34:22.0 | One crack at 20 min. into test |
| 8A | 7.568 (1550) | 1.25 (0.491) | 7.3 (1.5) | DF wood 2"x4" | 15:42.0 | 36:42.0 | 38:46.0 | Some cracking |
| 9A | 7.568 (1550) | 1.25 (0.491) | 7.3 (1.5) | 25 ga. | 14:20.0 | 37:28.0 | | cracking near screw heads and micro cracks near edges |
| 10A | 7.573 (1551) | 1.24 (0.489) | 14.7 (3) | 25 ga. | 14:26.0 | 36:06.0 | | no cracking |
| 11 | 8.105 (1660) | 1.59 (5/8) | | 20 ga. | 18:00.0 | 43:28.0 | 45:20.0 | microcracking all over, but no large cracks |
| **Table 2: Experimental Gypsum Panel Core Parameters and Furnace Failure Test Results (Samples that do not contain fiberglass are reference examples)** | | | | | | | | |

These tests showed that samples containing even small amounts of fiberglass are able to withstand the increased temperatures and maintain panel integrity during a fire much longer than panels containing no fiberglass. Additionally, board weight contributes to the fire performance of a panel.

In another test, 1.27 cm (½ inch) gypsum panel samples were prepared according to the formulation given in Table 1 and with 9.76 g/m² (2 lb/msf) fiberglass content. Samples were fastened to both sides of a 3.05 m x 3.05 m (10' x 10') wood studs wall assembly and tested according to the ASTM E-119 fire test protocol (which specifies studs spaced 40.6 cm (16") on center). One sample was also tested on 61.0 cm (24 inch) spaced studs. The sample parameters and test results are given in Table 3.

Two panel core samples (samples 1 and 2 in Table 3) weighed 7.495 kg/m² (1535 lb/msf). One panel core sample (sample 3 in Table 3) weighed 7.968 kg/m² (1632 lb/msf) (this sample included gypsum in addition to the amount given in Table 1 to increase the weight). Samples 4 and 5 in Table 3 are commercial 1.27 cm (½ inch) gypsum panel products, which had weights of 6.621 kg/m² and 6.796 (1356 lb/msf and 1392), respectively.

| **Sample** | **Panel Weight (kg/m²) (lb/msf)** | **Stud Spacing (cm) (inch)** | **Minutes to Failure** |
|---|---|---|---|
| 1 | 7.495 | 40.6 | 47 |
| | (1535) | (16) | |
| 2 | 7.495 | 61.0 | 39 |
| | (1535) | (24) | |
| 3 | (7.968) | 40.6 | 48 |
| | 1632 | (16) | |
| 4 | 6.621 | 40.6 | 38 |
| | (1356) | (16) | |
| 5 | 6.796 | 40.6 | 34 |
| | (1392) | (16) | |
| **Table 3: Gypsum Panel Parameters and ASTME-119 Results** | | | |

The test samples containing fiberglass each achieved an ASTM E-119 fire rating of at least 30 minutes, while the samples on the standard 40.6 cm (16 inch) wood studs both achieved a fire rating of at least 45 minutes. The commercial lightweight gypsum panels on 40.6 cm (16 inch) studs did not achieve a 45 minute rating. In fact, the mid-weight fiberglass containing panel cores offered at least 10 additional minutes of fire resistance.

Thus, it was determined that by increasing the weight of gypsum panels over the current lightweight residential panels and by adding a small amount of fiberglass to the core, the fire resistance rating of the panel can be significantly improved. Compared to traditional fire rated gypsum boards, the panels of the present disclosure are lighter and do not require the addition of fire resistance enhancing additives other than fiberglass. Due to their weight and cost, such traditional fire resistance boards have not typically been used in residential construction. Instead, standard 1.27 cm (½ inch) gypsum boards that are used in residential construction are lightweight but do not offer fire resistance ratings of 30 or 45 minutes when tested in similar constructions to the gypsum board of the invention.

Accordingly, the presently disclosed gypsum panels offer a fire resistant alternative that is light enough for residential use, but also provides enhanced fire resistance by reducing shrinkage and cracking of the gypsum core through the addition of a small amount of fiberglass. These cores advantageously provide an extra level of fire resistance to slow the spread of a fire within a home, compared to other gypsum board products typically installed in residential construction.

## Claims

1. A gypsum panel, comprising:
a core having a thickness of about 1.27 cm (½ inch) and a weight of from 6.84 kg/m² to 8.54 kg/m² (1400 lb/msf to 1750 lb/msf), the core comprising gypsum and fiberglass, the fiberglass being present in the core in an amount of from 0.0073 kg/m² to 0.015 kg/m² (1.5 lb/msf to 3 lb/msf) and the gypsum being present in the core in an amount of from 6.59 kg/m² to 8.15 kg/m² (1350 lb/msf to 1670 lb/msf); and
wherein the core has an ASTM E-119 wood stud fire test rating of at least 30 minutes.

2. The gypsum panel of claim 1, wherein the core has an ASTM E-119 wood stud fire test rating of at least 45 minutes.

3. The gypsum panel of claim 1, wherein the core has a weight of from 7.08 kg/m² to 8.30 kg/m² (1450 lb/msf to 1700 lb/msf).

4. The gypsum panel of claim 1, wherein the gypsum is present in an amount of from 6.84 kg/m² to 7.91 kg/m² (1400 lb/msf to 1620 lb/msf).

5. A method of making a gypsum panel, comprising:
combining gypsum stucco in an amount of 5.66 kg/m² to 6.93 kg/m² (1160 lb/msf to 1420 lb/msf), water, and fiberglass to form a slurry; and
setting the slurry to form a core having a thickness of about 1.27 cm (½ inch) and a weight of from 6.84 kg/m² to 8.54 kg/m² (1400 lb/msf to 1750 lb/msf), and comprising fiberglass in an amount of from 0.0073 kg/m² to 0.015 kg/m² (1.5 lb/msf to 3 lb/msf) and gypsum in an amount of from 6.59 kg/m² to 8.15 kg/m² (1350 lb/msf to 1670 lb/msf),
wherein the core has an ASTM E-119 wood stud fire test rating of at least 30 minutes.

6. The method of claim 5, wherein the core has a weight of from 7.08 kg/m² to 8.30 kg/m² (1450 lb/msf to 1700 lb/msf).

7. The method of claim 5, wherein the core comprises gypsum in an amount of from 6.84 kg/m² to 7.91 kg/m² (1400 lb/msf to 1620 lb/msf).

8. The method of claim 5, further comprising affixing a paper facer to at least one face of the core.

9. The gypsum panel of claim 1, wherein the core comprises a densified gypsum layer adjacent to a layer comprising the gypsum and fiberglass.

10. The gypsum panel of claim 1, further comprising a paper facer on at least one face of the core.

11. The gypsum panel of claim 1, wherein the core further comprises one or more additives selected from pregelatinized starch, sodium trimetaphosphate, kaolin clay, siloxane, and siliconate.

12. The method of claim 5, wherein the core further comprises one or more additives selected from pregelatinized starch, sodium trimetaphosphate, kaolin clay, siloxane, and siliconate.

13. The method of claim 5, wherein the gypsum stucco is combined in an amount of 5.86 kg/m² to 6.74 kg/m² (1200 lb/msf to 1380 lb/msf) with the water and fiberglass, to form the slurry.

## Patentansprüche

1. Gipsplatte, umfassend:
einen Kern mit einer Dicke von etwa 1,27 cm (½ Zoll) und einem Gewicht von 6,84 kg/m² bis 8,54 kg/m² (1400 Ib/msf bis 1750 lb/msf), wobei der Kern Gips und Glasfaser umfasst, wobei die Glasfaser in dem Kern in einer Menge von 0,0073 kg/m² bis 0,015 kg/m² (1,5 Ib/msf bis 3 lb/msf) vorliegt und der Gips in dem Kern in einer Menge von 6,59 kg/m² bis 8,15 kg/m² (1350 Ib/msf bis 1670 lb/msf) vorliegt; und
wobei der Kern eine ASTM E-119-Holzbolzenbrandtestbewertung von mindestens 30 Minuten aufweist.

2. Gipsplatte nach Anspruch 1, wobei der Kern eine ASTM E-119-Holzbolzenbrandtestbewertung von mindestens 45 Minuten aufweist.

3. Gipsplatte nach Anspruch 1, wobei der Kern ein Gewicht von 7,08 kg/m² bis 8,30 kg/m² (1450 Ib/msf bis 1700 lb/msf) aufweist.

4. Gipsplatte nach Anspruch 1, wobei der Gips in einer Menge von 6,84 kg/m² bis 7,91 kg/m² (1400 Ib/msf bis 1620 lb/msf) vorliegt.

5. Verfahren zum Herstellen einer Gipsplatte, umfassend:
Kombinieren von Gipsstuck in einer Menge von 5,66 kg/m² bis 6,93 kg/m² (1160 lb/msf bis 1420 lb/msf), Wasser und Glasfaser, um eine Aufschlämmung zu bilden; und
Abbinden der Aufschlämmung, um einen Kern mit einer Dicke von etwa 1,27 cm (½ Zoll) und einem Gewicht von 6,84 kg/m² bis 8,54 kg/m² (1400 lb/msf bis 1750 lb/msf) zu bilden, und umfassend Glasfaser in einer Menge von 0,0073 kg/m² bis 0,015 kg/m² (1,5 lb/msf bis 3 lb/msf) und Gips in einer Menge von 6,59 kg/m² bis 8,15 kg/m² (1350 lb/msf bis 1670 lb/msf),
wobei der Kern eine ASTM E-119-Holzbolzenbrandtestbewertung von mindestens 30 Minuten aufweist.

6. Verfahren nach Anspruch 5, wobei der Kern ein Gewicht von 7,08 kg/m² bis 8,30 kg/m² (1450 lb/msf bis 1700 lb/msf) aufweist.

7. Verfahren nach Anspruch 5, wobei der Kern Gips in einer Menge von 6,84 kg/m² bis 7,91 kg/m² (1400 lb/msf bis 1620 lb/msf) umfasst.

8. Verfahren nach Anspruch 5, ferner umfassend das Befestigen einer Papierdeckschicht an mindestens einer Fläche des Kerns.

9. Gipsplatte nach Anspruch 1, wobei der Kern eine verdichtete Gipsschicht umfasst, die an eine Schicht angrenzt, die den Gips und die Glasfaser umfasst.

10. Gipsplatte nach Anspruch 1, ferner umfassend eine Papierdeckschicht auf mindestens einer Fläche des Kerns.

11. Gipsplatte nach Anspruch 1, wobei der Kern ferner ein oder mehrere Additive umfasst, die aus vorgelatinierter Stärke, Natriumtrimetaphosphat, Kaolinton, Siloxan und Silikonat ausgewählt sind.

12. Verfahren nach Anspruch 5, wobei der Kern ferner ein oder mehrere Additive umfasst, die aus vorgelatinierter Stärke, Natriumtrimetaphosphat, Kaolinton, Siloxan und Silikonat ausgewählt sind.

13. Verfahren nach Anspruch 5, wobei das Gipsstuck in einer Menge von 5,86 kg/m² bis 6,74 kg/m² (1200 lb/msf bis 1380 lb/msf) mit dem Wasser und der Glasfaser kombiniert wird, um die Aufschlämmung zu bilden.

## Revendications

1. Panneau de gypse, comprenant :
une âme ayant une épaisseur d'environ 1,27 cm (½ pouce) et un poids allant de 6,84 kg/m² à 8,54 kg/m² (1400 livres/1000 pieds carrés à 1750 livres/1000 pieds carrés), l'âme comprenant du gypse et de la fibre de verre, la fibre de verre étant présente dans l'âme en une quantité allant de 0,0073 kg/m² à 0,015 kg/m² (1,5 livre/1000 pieds carrés à 3 livres/1000 pieds carrés) et le gypse étant présent dans l'âme en une quantité allant de 6,59 kg/m² à 8,15 kg/m² (1350 livres/1000 pieds carrés à 1670 livres/1000 pieds carrés) ; et
dans lequel l'âme a un classement de résistance au feu de montant en bois ASTM E-119 d'au moins 30 minutes.

2. Panneau de gypse selon la revendication 1, dans lequel l'âme a un classement de résistance au feu de montant en bois ASTM E-119 d'au moins 45 minutes.

3. Panneau de gypse selon la revendication 1, dans lequel l'âme a un poids allant de 7,08 kg/m² à 8,30 kg/m² (1450 livres/1000 pieds carrés à 1700 livres/1000 pieds carrés).

4. Panneau de gypse selon la revendication 1, dans lequel le gypse est présent en une quantité allant de 6,84 kg/m² à 7,91 kg/m²
(1400 livres/1000 pieds carrés à 1620 livres/1000 pieds carrés).

5. Procédé de fabrication d'un panneau de gypse, comprenant :
la combinaison de stuc de gypse en une quantité de 5,66 kg/m² à 6,93 kg/m² (1160 livres/1000 pieds carrés à 1420 livres/1000 pieds carrés), d'eau, et de fibre de verre pour former une bouillie ; et
la prise de la bouillie pour former une âme ayant une épaisseur d'environ 1,27 cm (½ pouce) et un poids allant de 6,84 kg/m² à 8,54 kg/m² (1400 livres/1000 pieds carrés à 1750 livres/1000 pieds carrés), et comprenant de la fibre de verre en une quantité allant de 0,0073 kg/m² à 0,015 kg/m² (1,5 livre/1000 pieds carrés à 3 livres/1000 pieds carrés) et du gypse en une quantité allant de 6,59 kg/m² à 8.15 kg/m² (1350 livres/1000 pieds carrés à 1670 livres/1000 pieds carrés),
dans lequel l'âme a un classement de résistance au feu de montant en bois ASTM E-119 d'au moins 30 minutes.

6. Procédé selon la revendication 5, dans lequel l'âme a un poids allant de 7,08 kg/m² à 8,30 kg/m² (1450 livres/1000 pieds carrés à 1700 livres/1000 pieds carrés).

7. Procédé selon la revendication 5, dans lequel l'âme comprend du gypse en une quantité allant de 6,84 kg/m² à 7,91 kg/m² (1400 livres/1000 pieds carrés à 1620 livres/1000 pieds carrés).

8. Procédé selon la revendication 5, comprenant en outre la fixation d'un parement en papier à au moins une face de l'âme.

9. Panneau de gypse selon la revendication 1, dans lequel l'âme comprend une couche de gypse densifiée adjacente à une couche comprenant le gypse et la fibre de verre.

10. Panneau de gypse selon la revendication 1, comprenant en outre un parement en papier sur au moins une face de l'âme.

11. Panneau de gypse selon la revendication 1, dans lequel l'âme comprend en outre un ou plusieurs additifs choisis parmi amidon prégélatinisé, trimétaphosphate de sodium, argile kaolin, siloxane, et siliconate.

12. Procédé selon la revendication 5, dans lequel l'âme comprend en outre un ou plusieurs additifs choisis parmi amidon prégélatinisé, trimétaphosphate de sodium, argile kaolin, siloxane, et siliconate.

13. Procédé selon la revendication 5, dans lequel le stuc de gypse est combiné en une quantité de 5,86 kg/m² à 6,74 kg/m² (1200 livres/1000 pieds carrés à 1380 livres/1000 pieds carrés) avec l'eau et la fibre de verre, pour former la bouillie.
